# EUROPEAN PATENT SPECIFICATION

(11) **EP 3 513 844 B1**
(45) Date of publication and mention of the grant of the patent: **25.11.2020**
(21) Application number: 18718179.7
(22) Date of filing: 14.02.2018
(51) Int. Cl.: A63B 69/16, A63B 22/16, A63B 26/00, A63B 24/00, A63B 22/00

(54) **CYCLING TRAINING APPARATUS**
RADFAHRTRAINER
APPAREIL POUR L'ENTRAÎNEMENT AU CYCLISME

(30) Priority: 15.02.2017 ES 201730184
(43) Date of publication of application: 24.07.2019
(73) Proprietor: Muntane Furio, Miguel, 08014 Barcelona (ES)
(72) Inventor: Muntane Furio, Miguel, 08014 Barcelona (ES)
(74) Representative: Isern Patentes y Marcas S.L.
(86) International application number: PCT/ES2018/070108
(87) International publication number: WO 2018/150069

(56) References cited:
- WO-A1-88/09688
- WO-A1-96/36399
- US-A- 4 580 983
- US-A1- 2012 238 412

## Description

### Object of the invention

The present invention, according to the stated title of this specification, relates to an apparatus for the training and biomechanical analysis of cycling mainly made up of a rolling platform and an anchoring assembly that supports the bicycle on said rolling platform, enabling the training for cycling to be done in a stationary manner by using the bicycle itself and simulating the common balancing or oscillating movements that cyclists make when they practice freely. Said training apparatus thus enables a much more realistic simulation of the movements that are normally made in cycling.

### Background of the invention

Carrying out training for cycling indoors is a very common and necessary practice, which undoubtedly complements outdoor training. On other occasions, they are likewise made necessary when inclement weather impedes them from being carried out. Thus, several types of apparatuses have been developed for this purpose.

Among the most well-known types are the so-called stationary bicycles, but these are basically limited to reinforcing the pedaling of the cyclist, and are not able to reproduce common training conditions. Another drawback they have is that cyclists cannot practice with their own bicycle, making the training less effective and thus failing to meet the objectives thereof.

Thus, it is of interest to develop training apparatuses or systems that simulate real training conditions. Some technical embodiments that focus on this aim are known in the state of the art. For example, patent ES2557852 discloses an apparatus for training with a real bicycle; however, it does not provide adequate securing of the bicycle, for which reason it is complicated for the cyclist to be able to reproduce real outdoor training conditions.

Document US4580983 A discloses the technical features of the preamble of claim 1. Documents ES1156161 and ES2220206 disclose other technical embodiments for indoor training for cycling, however, they do not perfectly imitate the movements that are most commonly made.

Thus, the simulation of cycling in interior spaces or indoors, which most accurately reproduces the movements that cyclists carry out during open air or outdoor rides or competitions, continues to be a need of the state of the art, which the object of the present invention resolves, since it enables optimal fastening of the normal training bicycle, without compromising the freedom of movement required in order to reproduce common balancing and oscillating movements and, in general, common outdoor training conditions.

Thus, from a technical point of view, all the movements of the cyclist+bicycle assembly are sought to be maintained, except for the advancement in space, upon enabling the bicycle to freely pivot on the rolling platform.

From a biomechanical point of view, it is sought that the cyclist has thoracic respiratory freedom by respecting the most natural muscle chains starting from the thorax and the shoulder girdle towards the pelvic girdle.

In current biomechanical studies, the postural behavior of the cyclist with static thoracic forces that they take on, together with the shoulder girdle and the joint of the shoulder and the stiffness of the muscle chains that come from the lower limbs, is analyzed.

The main objective of the training, particularly by using the apparatus object of the invention, is to develop the bases of muscular equilibrium, emphasizing that breathing is what stabilizes the vertebral column of the cyclist over the free movement of the bicycle. It will be more important to study the upper limbs with respect to the lower limbs when defining the bases of biomechanics in terms of the capacity to give respiratory power when facing this disequilibrium in search of stability.

The patent US 2011287901 is also known where a bicycle simulator apparatus is described, provided for different degrees of tilting that has a fork attached to the rear wheel configured to be able to oscillate with respect to a rotation axis, in no case the rotation axis "X" provided to perform the rotation of the intermediate arm and therefore, an oscillating movement of the bicycle as well as the rotation axis "Z", perpendicular to the "X" axis, intersect at the rolling point that corresponds to the point of contact between the rear wheel of the bicycle and the rolling area. Therefore, the simulator apparatus can cause the user to suffer from increased stiffness of the upper muscle of the legs, due to not obtaining a restricted degree of simulation.

### Description of the invention

According to the invention the problem posed is solved by the features of claim 1.

The object of the present invention is to therefore provide a training apparatus for cycling comprising:
a) a rolling platform, which has a front rolling area and a rear rolling area, and
b) an anchoring assembly that supports the bicycle on the rolling platform, said anchoring assembly has a fork that is joined by the ends of the two arms thereof to the axle of the rear wheel of the bicycle and on the other end, it is linked to an intermediate arm, where said intermediate arm is joined by the lower portion thereof in an articulated manner to a securing arm defining a rotation axis X, and where said securing arm is joined in an articulated manner to a lateral moving part defining a rotation axis Z, where the rotation axis X and the rotation axis Z intersect at the rolling point of the rear wheel.

In the training apparatus for cycling, object of the present invention, the movements that the cyclist performs when carrying out outdoor training are able to be performed or simulated very realistically, due to the presence, fundamentally, of the rotation axes that are defined in the articulated joints of the anchoring assembly, especially in the articulated joints between the intermediate arm and the securing arm and between the securing arm and the lateral movement part.

As indicated previously, the rotation axes X and Z that are defined by the aforementioned joints, intersect at the rolling point of the rear wheel, where said rolling point is the point where the rear wheel is in contact with the rear rolling area, thus being able to produce the same movement of the bicycle that is produced in reality. Another advantage of this arrangement of the axes from the dynamic point of view is that the reactions of the wheel with the rolling platform do not generate additional forces/moments that negatively affect the movement of the bicycle, unlike the current models.

Another articulated joint of the apparatus object of the present invention is the one formed between the fork and the intermediate arm, which enables the weight of the cyclist+bicycle assembly to be supported on the rolling platform and not on the anchoring assembly. Furthermore, this articulated joint enables the apparatus to be used, and thus adapted, to all the wheel diameters that are commonly used when practicing cycling and exist in the market.

In an alternate embodiment of the invention, there is the possibility that the fork is joined to the intermediate arm by means of a sliding coupling system, such that the fork is configured to be moved vertically and linearly by the intermediate arm, which also enables it to adapt to any size of bicycle or user who rides the bicycle.

Additionally, another important element that contributes effectiveness to the training apparatus for cycling, object of the present invention, is that the lateral movement part is mounted on guide means, comprising at least one bar that is fastened by the ends thereof to the rolling platform. In a variant embodiment of the invention, the guide means comprise two bars that run parallel to each other, which are fastened by the ends thereof to the rolling platform. Said guide means enable the lateral movement of the rear wheel of the bicycle.

In a particular embodiment of the training apparatus for cycling of the present invention, the rolling platform is mounted on a frame, by means of front securing elements and rear securing elements. Additionally, the front securing elements contain elevation means of the rolling platform, which contributes the additional advantage of being able to tilt the rolling platform according to what the training requires. Said tilting means can have hydraulic pistons, for example.

In another particular embodiment of the training apparatus for cycling of the present invention, said apparatus contains an electric motor that propels the front rolling area, for which reason this area is that which moves the front wheel of the bicycle.

In an even more particular embodiment, the training apparatus incorporates an electronic control device that regulates both the degree of elevation of the rolling platform and the speed of the electric motor; for which reason the speed of the front wheel can be adjusted to the speed of the rear wheel.

In a more particular embodiment of the training apparatus object of the present invention, the rear rolling area will be able to incorporate a system for adjusting the resistance to the advancement and for gathering data such as speed and power, among other parameters, using means currently known in the state of the art to do so.

Other characteristics and advantages of the training apparatus for cycling, object of the present invention, will become clear in light of the description of a preferred, though non-exclusive, embodiment, which, by way of a non-limiting example, is illustrated in the accompanying drawings that are described below.

### Description of the drawings

With the aim of complementing the above description and gaining a better understanding of the characteristics of the present invention, a set of figures listed below constituting an integral part thereof is attached:
Figure 1 shows a perspective view of the training apparatus for cycling of the present invention, with the bicycle incorporated.
Figure 2 shows a perspective view of the training apparatus for cycling of the present invention.
Figure 3 shows a perspective view of the anchoring assembly.
Figure 4 shows a schematic view of the rear wheel mounted in the anchoring assembly, where the rotation axes X and Z are shown.
Figure 5 shows a schematic side view of the training apparatus for cycling of the present invention, where the rotation axes X and Y are shown.
Figure 6 shows a schematic side view of the training apparatus for cycling of the present invention, which shows the rolling platform mounted on the frame and in the tilted position.

### Preferred embodiment of the invention

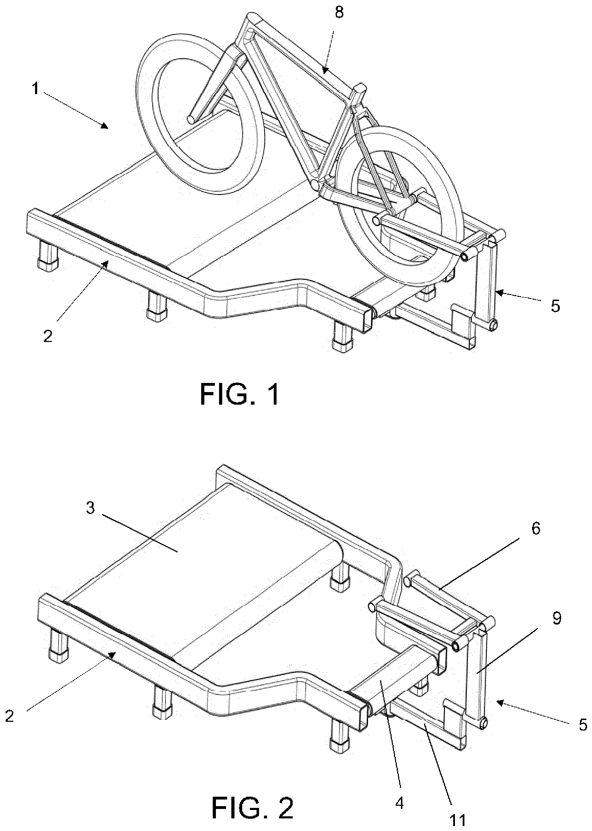

According to an embodiment of the present invention, Figure 1 shows a training apparatus for cycling, with the bicycle incorporated. As seen in said figure, as well as in figures 2-4, the training apparatus for cycling (1) comprises:
a) a rolling platform (2) which has a front rolling area (3) and a rear rolling area (4), and
b) an anchoring assembly (5) that supports the bicycle (8) on the rolling platform (2), characterized in that said anchoring assembly (5) has a fork (6) that is joined by the ends (6') of the arms thereof to the axle of the rear wheel (7) of the bicycle (8) and on the other end (6"), it is linked to an intermediate arm (9), where said intermediate arm (9) is joined by the lower portion (9') thereof in an articulated manner to a securing arm (11), defining a rotation axis "X", and where said securing arm (11) is joined in an articulated manner to a lateral moving part (12) defining a rotation axis "Z", where the rotation axis "X" and the rotation axis "Z" intersect at the rolling point (13) of the rear wheel (7).

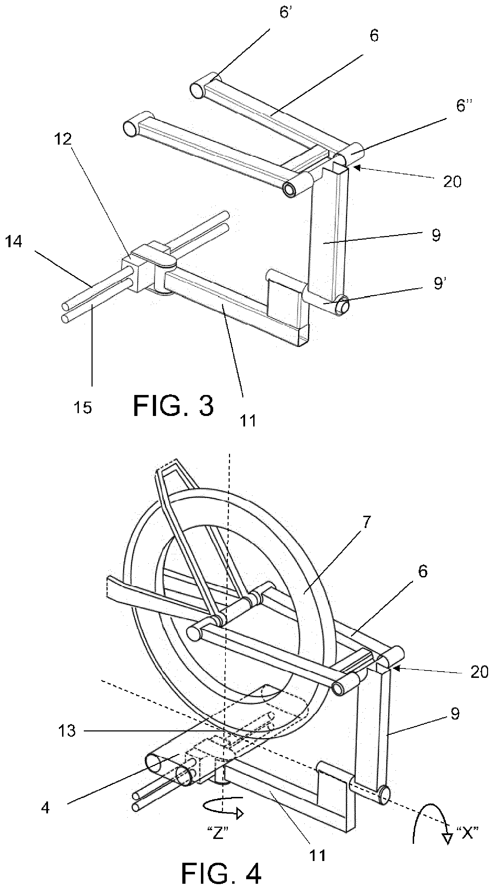

Specifically, in Figure 3 it can be seen that the lateral movement part (12) is mounted on guide means, which, in this specific case, are exemplified with two bars (14) and (15) that run parallel to each other, which are fastened by the ends thereof to the rolling platform (2). As mentioned previously, said guide means enable the movement towards the sides of the lateral movement part (12) and with it the lateral movement of the rear wheel (7), contributing to the freedom of movement of the bicycle (8) and a better simulation thereof.

In said figure 3 it is shown that the fork (6) is joined to the intermediate arm (9) by means of an articulated joint (20).

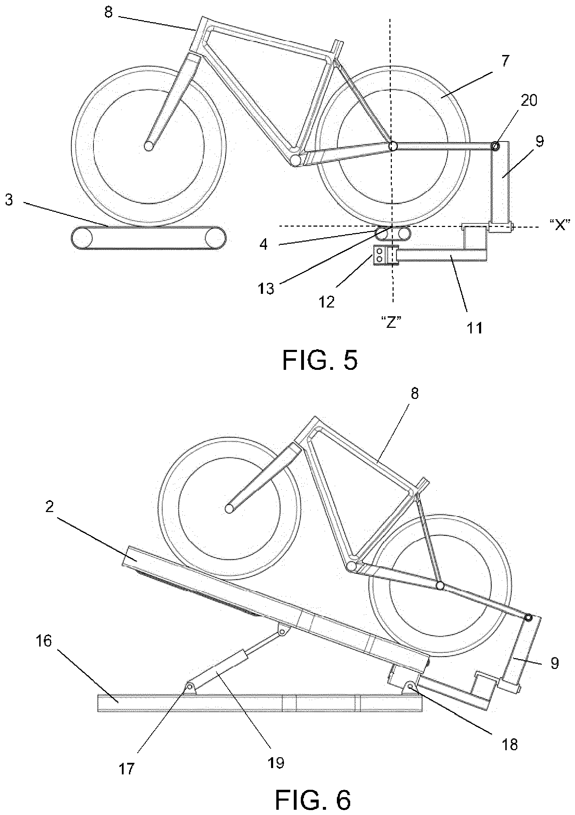

Furthermore, Figure 5 shows a schematic lateral view of the training apparatus for cycling, object of the present invention, where it is seen that the rolling point (13), in other words, the point where the rear wheel (7) and the rear rolling area (4) come into contact, is where the rotation axes "X" and "Z" intersect.

Figure 6 shows the training apparatus for cycling (1) object of the present invention, which incorporates the bicycle (8) in a particular form of use, specifically in the tilted position, simulating, for example, a hill. To do so, the rolling platform (2) is mounted on a frame (16) by means of front securing elements (17) and rear securing elements (18) and in this particular case, the front securing elements (17) contain tilting means (19) of the rolling platform (2).

Finally, as an additional embodiment that is not shown, the training apparatus object of the present invention contains an electric motor that propels the front rolling area (3).

The details, shapes, dimensions and other accessory elements, as well as the materials used to manufacture the training apparatus for cycling, object of the present invention, may be suitably substituted for others which are technically equivalent, and do not diverge from the essential nature of the invention, nor the scope defined by the claims included below.

## Claims

1. A training apparatus for cycling (1) comprising:
a) a rolling platform (2) which has a front rolling area (3) and a rear rolling area (4), and
b) an anchoring assembly (5) for supporting a bicycle (8) on the rolling platform (2),
said anchoring assembly (5) having a fork (6) with arms having first ends (6') and second ends (6"), wherein the fork (6) can be joined by the first ends (6') of the arms thereof to the axle of the rear wheel (7) of the bicycle (8) and wherein the second ends (6") are linked to an intermediate arm (9), wherein said intermediate arm (9) is joined by the lower portion (9') thereof in an articulated manner to a securing arm (11), defining a rotation axis "X", the training apparatus **characterized in that** said securing arm (11) is joined in an articulated manner to a lateral moving part (12) defining a rotation axis "Z", where the rotation axis "X" and the rotation axis "Z" intersect at the rolling point (13) of the rear wheel (7).

2. The training apparatus for cycling (1) according to claim 1, **characterized in that** the lateral movement part (12) is mounted on guide means.

3. The training apparatus for cycling (1) according to claim 2, **characterized in that** the guide means comprise at least one bar (14) that is fastened by the ends thereof to the rolling platform (2).

4. The training apparatus for cycling (1) according to claim 2, **characterized in that** the guide means comprise two bars (14) and (15) that run parallel to each other, which are fastened by the ends thereof to the rolling platform (2).

5. The training apparatus for cycling (1) according to claim 1, **characterized in that** the fork (6) is joined to the intermediate arm (9) by means of an articulated joint (20).

6. The training apparatus for cycling (1) according to claim 1, **characterized in that** the fork (6) is joined to the intermediate arm (9) by means of a sliding coupling system, such that the fork (6) is configured to be moved vertically by the intermediate arm (9).

7. The training apparatus for cycling (1) according to claim 1, **characterized in that** the rolling platform (2) is mounted on a frame (16) by means of front securing elements (17) and rear securing elements (18).

8. The training apparatus for cycling (1) according to claim 7, **characterized in that** the front securing elements (17) contain tilting means (19) of the rolling platform (2).

9. The training apparatus for cycling (1) according to claim 1, **characterized in that** it contains an electric motor that propels the front rolling area (3).

## Patentansprüche

1. Trainingsvorrichtung zum Radfahren (1), umfassend:
a) eine Rollplattform (2), die einen vorderen Rollbereich (3) und einen hinteren Rollbereich (4) aufweist, und
b) eine Verankerungsanordnung (5) zum Stützen eines Fahrrads (8) auf der Rollplattform (2),
wobei die Verankerungsanordnung (5) eine Gabel (6) mit Armen mit ersten Enden (6') und zweiten Enden (6") aufweist, wobei die Gabel (6) durch die ersten Enden (6') ihrer Arme mit der Achse des Hinterrads (7) des Fahrrads (8) verbunden sein kann und wobei die zweiten Enden (6") mit einem Zwischenarm (9) verbunden sind, wobei der Zwischenarm (9) durch seinen unteren Abschnitt (9') auf gelenkige Weise mit einem Sicherungsarm (11) verbunden ist, der eine Rotationsachse "X" definiert, wobei die Trainingsvorrichtung **dadurch gekennzeichnet ist, dass** der Sicherungsarm (11) auf gelenkige Weise mit einem seitlichen Bewegungsteil (12) verbunden ist, der eine Rotationsachse "Z" definiert, wobei sich die Rotationsachse "X" und die Rotationsachse "Z" am Rollpunkt (13) des Hinterrads (7) schneiden.

2. Trainingsvorrichtung zum Radfahren (1) nach Anspruch 1, **dadurch gekennzeichnet, dass** der seitliche Bewegungsteil (12) auf Führungsmitteln montiert ist.

3. Trainingsvorrichtung zum Radfahren (1) nach Anspruch 2, **dadurch gekennzeichnet, dass** die Führungsmittel mindestens eine Stange (14) umfassen, die mit ihren Enden an der Rollplattform (2) befestigt ist.

4. Trainingsvorrichtung zum Radfahren (1) nach Anspruch 2, **dadurch gekennzeichnet, dass** die Führungsmittel mindestens zwei Stangen (14) und (15) umfassen, die parallel zueinander verlaufen und mit ihren Enden an der Rollplattform (2) befestigt sind.

5. Trainingsvorrichtung zum Radfahren (1) nach Anspruch 1, **dadurch gekennzeichnet, dass** die Gabel (6) über ein Gelenk (20) mit dem Zwischenarm (9) verbunden ist.

6. Trainingsvorrichtung zum Radfahren (1) nach Anspruch 1, **dadurch gekennzeichnet, dass** die Gabel (6) mittels eines Gleitkupplungssystems mit dem Zwischenarm (9) verbunden ist, so dass die Gabel (6) konfiguriert ist, vom Zwischenarm (9) vertikal bewegt zu werden.

7. Trainingsvorrichtung zum Radfahren (1) nach Anspruch 1, **dadurch gekennzeichnet, dass** die Rollplattform (2) mittels vorderer Sicherungselemente (17) und hinterer Sicherungselemente (18) auf einem Rahmen (16) montiert ist.

8. Trainingsvorrichtung zum Radfahren (1) nach Anspruch 7, **dadurch gekennzeichnet, dass** die vorderen Sicherungselemente (17) Kippmittel (19) der Rollplattform (2) enthalten.

9. Trainingsvorrichtung zum Radfahren (1) nach Anspruch 1, **dadurch gekennzeichnet, dass** sie einen Elektromotor enthält, der den vorderen Rollbereich (3) antreibt.

## Revendications

1. Appareil d'entraînement pour le cyclisme (1) comprenant :
a) une plateforme de roulement (2) qui a une zone de roulement avant (3) et une zone de roulement arrière (4), et
b) un ensemble d'ancrage (5) pour supporter une bicyclette (8) sur la plateforme roulante (2), ledit ensemble d'ancrage (5) ayant une fourche (6) avec des bras ayant des premières extrémités (6') et des deuxièmes extrémités (6"), dans lequel la fourche (6) peut être reliée par les premières extrémités (6') de ses bras à l'essieu de la roue arrière (7) de la bicyclette (8) et dans lequel les deuxièmes extrémités (6") sont liées à un bras intermédiaire (9), dans lequel ledit bras intermédiaire (9) est relié par sa partie inférieure (9') de manière articulée à un bras de fixation (11), définissant un axe de rotation «X», l'appareil d'entraînement **caractérisé en ce que** ledit bras de fixation (11) est relié de manière articulée à une partie mobile latérale (12) définissant un axe de rotation « Z », où l'axe de rotation « X » et l'axe de rotation « Z » se croisent au point de roulement (13) de la roue arrière (7).

2. Appareil d'entraînement pour le cyclisme (1) selon la revendication 1, **caractérisé en ce que** la partie de déplacement latéral (12) est montée sur des moyens de guidage.

3. Appareil d'entraînement pour le cyclisme (1) selon la revendication 2, **caractérisé en ce que** les moyens de guidage comprennent au moins une barre (14) qui est fixée par ses extrémités à la plateforme de roulement (2).

4. Appareil d'entraînement pour le cyclisme (1) selon la revendication 2, **caractérisé en ce que** les moyens de guidage comprennent deux barres (14) et (15) qui sont parallèles l'une à l'autre, qui sont fixées par leurs extrémités à la plateforme de roulement (2).

5. Appareil d'entraînement pour le cyclisme (1) selon la revendication 1, **caractérisé en ce que** la fourche (6) est reliée au bras intermédiaire (9) au moyen d'un joint articulé (20).

6. Appareil d'entraînement pour le cyclisme (1) selon la revendication 1, **caractérisé en ce que** la fourche (6) est reliée au bras intermédiaire (9) au moyen d'un système de couplage coulissant, de sorte que la fourche (6) est configurée pour être déplacée verticalement par le bras intermédiaire (9).

7. Appareil d'entraînement pour le cyclisme (1) selon la revendication 1, **caractérisé en ce que** la plateforme roulante (2) est montée sur un châssis (16) au moyen d'éléments de fixation avant (17) et d'éléments de fixation arrière (18).

8. Appareil d'entraînement pour le cyclisme (1) selon la revendication 7, **caractérisé en ce que** les éléments de fixation avant (17) contiennent des moyens d'inclinaison (19) de la plateforme roulante (2).

9. Appareil d'entraînement pour le cyclisme (1) selon la revendication 1, **caractérisé en ce qu'**il contient un moteur électrique qui propulse la zone de roulement avant (3).
